(19) Europäisches Patentamt
European Patent Office
Office européen des brevets

(11) **EP 3 428 582 B1**

(12) **EUROPÄISCHE PATENTSCHRIFT**

(45) Veröffentlichungstag und Bekanntmachung des Hinweises auf die Patenterteilung:
**04.03.2020   Patentblatt 2020/10**

(51) Int Cl.:
***G01D 5/14*** *(2006.01)*

(21) Anmeldenummer: **17180732.4**

(22) Anmeldetag: **11.07.2017**

(54) **SENSOR**

SENSOR

CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.01.2019   Patentblatt 2019/03**

(73) Patentinhaber: **SICK AG**
**79183 Waldkirch (DE)**

(72) Erfinder: **Bludau, Thomas**
**79111 Denzlingen (DE)**

(56) Entgegenhaltungen:
**EP-A1- 1 826 533       EP-A2- 1 679 493**
**DE-A1-102007 002 221   US-A1- 2013 027 028**
**US-A1- 2014 239 942**

**Beschreibung**

Die vorliegende Erfindung betrifft einen Sensor zur berührungslosen magnetischen Erfassung linearer Relativbewegungen eines Gebermagneten nach dem Oberbegriff von Anspruch 1.

In Pneumatikzylindern wird die Kolbenposition meist über einen an oder auf dem Kolben befestigten Gebermagneten bestimmt. Die Charakteristika wie Ausrichtung, Magnetisierung, Remanenz oder Geometrie des Magneten können dabei variieren.

Die Bestimmung der Position des Magneten erfolgt dabei meist mit Positionssensoren, deren Baulänge in etwa ihrem Messbereich entspricht.

Dieses Messverfahren nutzt eine Vielzahl von Hallelementen, die entlang des Messbereichs in einem festen Abstand positioniert sind und die jeweils eine radiale Komponente des Magnetfeldes in einem kleinen Bereich links und rechts des Bauteilmittelpunktes messen können. Größere Messbereiche werden über eine größere Anzahl an Hallelementen erreicht. Bekannte Produkte sind z. B. die Produktfamilien MPS und MPA der Anmelderin.

Dieses Messverfahren hat den Hauptnachteil, dass die Baulänge des Sensors immer dem erreichbaren Messbereich entsprechen muss. Außerdem müssen die einzelnen Elemente über eine relativ komplexe Ansteuerung selektiert werden und können auch nur auf Zylindern mit axial magnetisierten Magneten betrieben werden. Insgesamt handelt es sich auch um eine recht teure Lösung, da viele Bauteile benötigt werden.

Die bisher bekannten 3D-Hallelemente verfügen größtenteils über eine digitale Schnittstelle, über die die ermittelten Messwerte der einzelnen Feldkomponenten übertragen werden. Diese Messwertübermittlung an einen nachgelagerten Mikrocontroller ist sehr langsam. Da die 3D-Hallelemente außerdem auch ein recht großes Signalrauschen aufweisen, ist eine schnelle und gleichzeitig genaue Messung der Magnetposition nicht möglich.

Die US20140239942A1 offenbart ein Verfahren zum berührungslosen Messen einer relativen Position einer ein Magnetfeld erzeugenden Magnetfeldquelle und eines Magnetfeldsensors in Bezug aufeinander. Weiterhin bezieht sich die US20140239942A1 auch auf einen entsprechenden Weggeber. Gemäß der US20140239942A1 erfasst der Magnetfeldsensor mindestens zwei Raumkomponenten des Magnetfeldes und es wird aus den gemessenen Komponenten ein Positionssignal erzeugt. Das Verfahren umfasst die folgenden Schritte: Berechnen des Positionssignals basierend auf einem Quotienten der beiden Magnetfeldkomponenten und vor dem Berechnen des Quotienten, Korrigieren derjenigen Magnetfeldkomponente, die entlang einer Bewegungsrichtung zwischen der Magnetfeldquelle und dem Magnetfeldsensor verläuft.

Die EP1679493A2 offenbart ein Verfahren zum Korrigieren einer aus Messwerten abgeleiteten Kennlinie für einen vorgegebenen Messbereich eines magnetoresistiv ausgelegten Weg- oder Winkelsensors, umfassend ein magnetoresistives Sensorelement und einen relativ zu diesem bewegbaren, eine sich mehrfach wiederholende, wechselnde magnetische Polarisierung aufweisenden und von dem Sensorelement des Sensors bezüglich seiner Magnetisierung abgetasteten Maßstab, wobei in einem ersten Schritt geprüft wird, ob die Kennlinie innerhalb des Messbereichs eine Sprungstelle aufweist, indem ein gemessener erster Phasenwinkel am ersten Ende des Messbereichs mit einem gemessenen zweiten Phasenwinkel am zweiten Ende des Messbereichs verglichen wird, und das Vorhandensein einer Sprungstelle in dem Messbereich festgestellt wird, wenn der zweite Phasenwinkel einen mit dem vom ersten Phasenwinkel in Richtung zum zweiten Phasenwinkel allgemein vorherrschenden Kennlinienverlauf nicht zu vereinbaren den Wert einnimmt, und bei Detektion einer Sprungstelle in einem zweiten Schritt eine zwischen den beiden Phasenwinkeln liegende Phasenwinkelentscheidungsschwelle definiert wird, um dann bei einer Betätigung des Sensors diejenigen nachfolgend gemessenen Phasenwinkel, die unterhalb der Phasenwinkelentscheidungsschwelle liegen um das Maß der Sprunghöhe der Sprungstelle zu korrigieren.

Die US20130027028A1 offenbart eine Sensoranordnung zum Ermitteln einer Magnetisierungsrichtung eines Gebermagneten. Bezüglich der Sensoranordnung weist die Sensoranordnung einen ersten Magnetfeldsensor zur Erfassung einer ersten Magnetfeldkomponente bezüglich einer ersten Raumrichtung und einer zweiten Magnetfeldkomponente bezüglich einer zweiten Raumrichtung und einen zweiten Magnetfeldsensor zur Erfassung einer dritten Magnetfeldkomponente bezüglich der ersten Raumrichtung und einer vierten Magnetfeldkomponente bezüglich der zweiten Raumrichtung auf, wobei der erste Magnetfeldsensor und der zweite Magnetfeldsensor beabstandet voneinander angeordnet sind. Die Sensoranordnung weist ferner eine Verarbeitungseinrichtung auf, die ausgebildet ist, um die erste Magnetfeldkomponente und die zweite Magnetfeldkomponente miteinander zu kombinieren, um eine erste Kombinationsgröße zu erhalten, um die dritte Magnetfeldkomponente und die vierte Magnetfeldkomponente miteinander zu kombinieren, um eine zweite Kombinationsgröße zu erhalten, um basierend auf einem Vergleich der ersten Kombinationsgröße und der zweiten Kombinationsgröße eine Lage des Gebermagneten bezüglich der Sensoranordnung zu ermitteln, und um basierend auf der ermittelten Lage des Gebermagneten bezüglich der Sensoranordnung und auf einem Vorzeichen einer erfassten Magnetfeldkomponente bezüglich der zweiten Raumrichtung die Magnetisierungsrichtung zu ermitteln.

Die DE102007002221A1 offenbart eine Wegsensoreinrichtung zur Erfassung des Weges bzw. der Position eines verstellbaren Bauteils, wobei zumindest zwei Hall-Effekt-Sensoren, die mit Abstand zueinander ortsfest im bzw.

am Versteilbereich des verstellbaren Bauteils oder mit dem verstellbaren Bauteil längs des Versteilbereichs bewegbar angeordnet sind, einen Magneten, der mit dem verstellbaren Bauteil längs des Versteilbereichs bewegbar oder ortsfest im bzw. am Versteilbereich des verstellbaren Bauteils angeordnet ist und dessen Magnetfeld mittels jedes der zumindest zwei Hall-Effekt-Sensoren erfassbar ist, und eine Auswerteeinheit, mittels der die Signalwerte der zumindest zwei Hall-Effekt-Sensoren erfassbar und zu einem einzigen, für die Position des verstellbaren Bauteils charakteristischen, vorzugsweise elektrischen Ausgangssignal verarbeitbar sind.

Die EP1826533A1 offenbart einen magnetischer Sensor zur Bestimmung von Positionen eines Gebermagneten entlang einer Strecke mit wenigstens zwei Sensorelementen, die beide wenigstens eine Komponente eines Magnetfeldes des Gebermagneten erfassen und mit einer mit dem Sensorelement verbundenen Auswerteeinheit zur Erzeugung wenigstens eines einer gewünschten Magnetposition entsprechenden Schaltsignals, wobei jedes Sensorelement die gesamte Strecke erfasst und dass für jede gewünschte Magnetposition eine über die Strecke eindeutige Signalwertegruppe der beiden Sensorelemente zur Erzeugung des Schaltsignals in der Auswerteeinheit vorliegt.

Eine Aufgabe der Erfindung besteht darin, einen Sensor bereitzustellen, der ein monotones Ausgangssignal analog zur Position eines Gebermagneten eines Pneumatikzylinders erzeugt, wobei die Sensorbaulänge deutlich kleiner als der erreichbare Messbereich sein soll.

Weiter soll der Sensor eine hohe Positionsauflösung, eine hohe Messrate, eine hohe Störunterdrückung, eine möglichst lineare Kennlinie und einen möglichst großen Messbereich aufweisen.

Es soll ein Messverfahren entwickelt werden, das einen Sensoraufbau ermöglicht, dessen Baulänge deutlich kleiner ist als sein Messbereich.

Außerdem soll der Sensor bei hoher Auflösung gleichzeitig auch eine hohe Schaltfrequenz, eine hohe Störunterdrückung und einen möglichst kleinen Linearitätsfehler in der Kennlinie bieten. Die Ausgangskennlinie des Sensors soll außerdem im gesamten Messbereich streng monoton sein. Weiterhin soll der Sensor sowohl für Zylinder mit axial als auch mit diametral magnetisiertem Magnet eingesetzt werden können.

Die Aufgabe wird gemäß Anspruch 1 gelöst durch einen Sensor zur berührungslosen magnetischen Erfassung linearer Relativbewegung eines Gebermagneten entlang einer Messstrecke mit mindestens zwei Sensorelementen, wobei die Sensorelemente jeweils zwei senkrecht zueinander stehende Komponenten eines Magnetfeldes des Gebermagneten erfassen, wobei die Sensorelemente und der Sensor kürzer sind als die Messstrecke, wobei eine erste Komponente eine axiale Komponente ist, wobei eine zweite Komponente eine radiale Komponente ist, wobei eine Auswerteeinheit vorgesehen ist, wobei die axiale Komponente jedes Sensorelementes und die radiale Komponente jedes Sensorelementes in der Auswerteeinheit nach einer mathematischen Funktion auswertbar sind, wobei die mathematische Funktion der Arcustangens (radiale Komponente/axiale Komponente) oder Arcustangens (axiale Komponente/radiale Komponente) ist, wodurch jeweils ein abschnittsweise monotones Positionssignal mit jeweils einem Wert eines Wertebereichs für jeweils eine Position entlang der Messstrecke des Gebermagneten gebildet ist, wobei die Auswerteeinheit ausgebildet ist, das jeweilige Positionssignal in mindestens einem Bereich der Messstrecke mit einem konstanten Korrekturwert zu korrigieren, so dass ein jeweils monotones Positionssignal mit einem monotonen Wertebereich über die gesamte Messstrecke gebildet ist, wobei die Werte der axialen Komponenten, die Werte der radialen Komponenten jeweils mit einem unterschiedlichen Gewichtungsfaktor gewichtet werden, wobei der Gewichtungsfaktor einer Zweierpotenz entspricht, , wobei die Auswerteeinheit (9) ausgebildet ist, einen Quotient von der ersten Magnetfeldsteigung des ersten Sensors und der zweiten Magnetfeldsteigung des zweiten Sensors zu bilden und der Quotient klassifizierbar ist, um eine Steigungsklasse zu bilden, wobei die Auswerteeinheit (9) ausgebildet ist, mindestens aus der Gewichtungsfaktorensumme und der Steigungsklasse eine Polung zu bestimmen und die Auswerteeinheit (9) ausgebildet ist, aufgrund der ermittelten Polung, des ARCTAN und des Vorzeichens der radialen Komponente (BY) das Positionssignal (10) in mindestens einem Bereich (14) der Messstrecke (3) mit einem konstanten Korrekturwert (21) zu korrigieren, so dass ein monotones Positionssignal (10) mit einem monotonen Wertebereich (12) über die gesamte Messstrecke (3) gebildet ist.

Gemäß der Erfindung werden zwei Magnetfeldrichtungen mit jeweils 2 Sensorelementen zur Positionsbestimmung ausgewertet. Das Sensorelement kann zwei aufeinander senkrecht stehende Magnetfeldkomponenten in der Chipfläche messen. Die Positionsberechnung erfolgt dabei über den Arcustangens des Quotienten der beiden Komponenten bzw. Feldkomponenten.

Das jeweilige Sensorelement erfasst zwei senkrecht zueinander stehende Komponenten eines Magnetfeldes des Gebermagneten. Dabei werden die Komponenten über die gesamte Länge des Zylinders bzw. über den gesamten Messbereich erfasst. Dadurch kann das Sensorelement und der Sensor kürzer sein als die Messstrecke

Die axiale Komponente und die radiale Komponente bilden zwei unterschiedliche Signalverläufe entlang der Messstrecke, deren Kombination eine eindeutige Information liefert über die genaue Position des Gebermagneten.

Die Auswerteeinheit ist vorgesehen, die axiale Komponente und die radiale Komponente nach einer mathematischen Funktion auszuwerten. Die mathematische Funktion ist der ARCTAN aus dem Quotienten (radiale Komponente/axiale Komponente) oder der ARCTAN aus dem Quotienten (axiale Komponente/ radiale Komponente).

Dadurch wird zunächst ein abschnittsweise monotones Positionssignal mit jeweils einem Wert eines Wertebereichs für jeweils eine Position entlang der Messstrecke des Gebermagneten gebildet. Jedoch weist dieses Signal bei einem ausreichend großen Kolbenhub bzw. bei einem ausreichend großen Messbereich noch Sprungstellen auf. Diese Sprünge im Ergebnis des Arcustangens resultieren aus der Limitierung des Wertebereiches von Pi/2 bis -Pi/2.

Um diese Limitierung des Arcustangens zu umgehen, wird das Ergebnis bzw. das Positionssignal in mindestens einem Bereich der Messstrecke mit einem konstanten Korrekturwert korrigiert, so dass ein monotones Positionssignal mit einem monotonen Wertebereich über die gesamte Messstrecke gebildet ist.

Gemäß der Erfindung kann der Gebermagnet beispielsweise axial oder diametral magnetisiert sein.

Der erfindungsgemäße Sensor ist im Vergleich zum Stand der Technik wesentlich kostengünstiger.

Als weiteres Kriterium zum Bestimmen der Magnetfeldparameter wird das Verhältnis der Magnetfeldänderungsraten der beiden Magnetfeldsensoren genutzt. Hierzu muss sich der Magnet bewegen. Um die Linearität des Ausgangssignals weiter zu verbessern, wird außerdem ein Verfahren zur Messung der Magnetfeldkrümmung beschrieben.

Der Abstand der Sensorelemente kann verändert werden, um den Messbereich an verschiedene Zylinder bzw. Magnetkonfigurationen anzupassen.

In Weiterbildung der Erfindung ist das Sensorelement ein Winkelsensor auf Basis einer TMR-Technologie.

Der magnetische Tunnelwiderstand (englisch tunnel magnetoresistance, TMR) oder TMR-Effekt ist ein magnetoresistiver Effekt, der in magnetischen Tunnelkontakten (engl. magnetic tunnel junction, MTJ) auftritt. Dabei handelt es sich um ein Bauelement bestehend aus zwei Ferromagneten, die durch einen dünnen Isolator getrennt sind. Ist die isolierende Schicht dünn genug, typisch einige Nanometer, so können Elektronen zwischen den beiden Ferromagneten tunneln. Bei dem Winkelsensor sind zwei Bauelemente senkrecht zueinander angeordnet, um die radiale und die axiale Komponente des Magnetfeldes zu messen.

Das Signalrauschen des TMR-Winkelsensors ist sehr gering. Der TMR-Winkelsensor bietet auch bei sehr schwachen Feldern noch ausreichend Signal. Somit kann vor allem in den Randbereichen eine wesentlich höhere Auflösung generiert werden. Der TMR-Winkelsensor ist vor allem bei niedrigen Magnetfeldstärken sehr empfindlich, was sich ebenfalls positiv auf die Auflösung auswirkt. Der Winkelsensor auf Basis der TMR-Technologie hat aufgrund seines extrem hohen Brückenwiderstands eine Stromaufnahme lediglich vorteilhaft im Mikroamperebereich.

Außerdem ist der Signalhub des Winkelsensors nicht abhängig von der Magnetfeldstärke. Daher kann der Betrag einer Feldkomponente nicht genutzt werden, im Vergleich zu einem 3D-Hallsensor.

Da der TMR-Winkelsensor die gemessenen Feldkomponenten als Analogspannung ausgibt, können diese mit einem einfachen ADC in einem Mikrocontroller erfasst werden. Dies erfolgt wesentlich schneller als das Auslesen der Messwerte über eine digitale Schnittstelle wie bei den 3D-Halls. Aus diesem Geschwindigkeitsvorteil ergeben sich zwei entscheidende Vorteile für die Sensorperformance: es kann eine stärkere Mittelwertbildung erfolgen, was für eine höhere Störunempfindlichkeit sorgt, gleichzeitig aber trotzdem noch eine höhere Schaltfrequenz erzielt werden, da der Geschwindigkeitsvorteil beim Auslesen der Analogspannung so enorm ist.

In Weiterbildung der Erfindung sind die Sensorelemente jeweils ein integrierter Baustein mit mindestens einem Analogausgang und die Auswerteeinheit ist ein Mikrocontroller, der einen integrierten Analog-/Digitalwandler umfasst, wodurch das mindestens eine Analogsignal an dem Analogausgang mit den Werten für die axiale Komponente und die radiale Komponente in der Auswerteeinheit digital verarbeitbar ist.

Dadurch ist eine sehr schnelle Signalverarbeitung der Werte für die axiale Komponente und die radiale Komponente gewährleistet. Aus diesem Geschwindigkeitsvorteil ergeben sich zwei weitere entscheidende Vorteile für die Performance des Sensors. Beispielsweise kann eine stärkere Mittelwertbildung der Signale erfolgen, was für eine höhere Störunempfindlichkeit sorgt. Gleichzeitig kann aber trotzdem noch eine höhere Schaltfrequenz erzielt werden, da der Geschwindigkeitsvorteil beim Auslesen des Analogsignals bzw. der Analogspannung enorm ist.

In Weiterbildung der Erfindung ist die Auswerteeinheit ausgebildet die Messstrecke in mindestens vier Bereiche aufzuteilen, wobei die Grenzen der Bereiche jeweils mindestens an den Sprungstellen des Wertebereichs des ARCTAN liegen und mindestens an der Stelle, an der das Positionssignal die größte Steigung aufweist.

Besonders bevorzugt ist die Auswerteeinheit ausgebildet, die Messstrecke in sechs Bereiche aufzuteilen, wobei zwei zusätzliche Grenzen der Bereiche zwischen den Sprungstellen des Wertebereiches des ARCTAN und der Stelle, an der das Positionssignal die größte Steigung aufweist, vorgesehen sind.

Besonders bevorzugt werden sieben Bereiche gebildet, wobei der siebte Bereich zentral an der Stelle gebildet ist, an der die zentralen Sprungstellen der Wertebereiche der ARCTAN-Funktionen beider Sensorelemente angeordnet sind.

Durch die Bildung der Bereiche kann das Positionssignal in den einzelnen Bereichen jeweils einzeln analysiert werden und die Bereiche des Positionssignals jeweils einzeln korrigiert werden. Die Korrekturfaktoren sind beispielsweise -Pi, + Pi und/oder Null.

Gemäß der Erfindung werden die Werte der axialen Komponenten, die Werte der radialen Komponenten jeweils mit einem unterschiedlichen Gewichtungsfaktor gewichtet, wobei der Gewichtungsfaktor insbesondere einer Zweierpotenz entspricht.

Dadurch können die Magnetfeldkomponenten besser unterschieden und besser erkannt werden.

In Weiterbildung der Erfindung ist die Auswerteeinheit ausgebildet, die Gewichtungsfaktoren der Werte der axialen Komponente und der Werte der radialen Komponente, jeweils eines Bereiches zu addieren, um jeweils eine Gewichtungsfaktorensumme zu bilden.

Durch die Bildung der Gewichtungsfaktorensummen kann bereits eine bessere Zuordnung der Magnetisierungsrichtung und der Polung erfolgen, jedoch ist dies noch nicht in jedem Fall eindeutig.

Gemäß einer bevorzugten Ausführungsform ist die Auswerteeinheit ausgebildet, ein Verhältnis der Magnetfeldsteigung nach dem Ausdruck |Bxn- Bxn-1| + |Byn - Byn-1| zu bilden, also der Summe der absoluten Differenzen zweier aufeinanderfolgender Werte jeder Magnetfeldkomponente.

Durch die Bildung des Verhältnisses der Magnetfeldsteigung ist eine Zuordnung der Magnetisierungsrichtung und der Polung in jedem Fall eindeutig.

Gemäß der Erfindung ist die Auswerteeinheit ausgebildet, einen Quotient von der ersten Magnetfeldsteigung des ersten Sensors und der zweiten Magnetfeldsteigung des zweiten Sensors zu bilden und der Quotient ist klassifizierbar, um eine Steigungsklasse zu bilden.

Diese Bestimmung der Magnetfeldsteigung ist wegen der fehlenden räumlichen Zuordnung abhängig von der Verfahrgeschwindigkeit des Magneten sowie der Feldausrichtung. Um diese zwei Einflussfaktoren zu eliminieren, wird das Verhältnis der beiden Steigungswerte von dem ersten Sensorelement und dem zweiten Sensorelement gebildet. Dabei wird immer der größere Wert als Dividend und der kleinere als Divisor verwendet. Der Quotient kann also als kleinsten Wert 1 annehmen. Es wird allerdings nur dann ein Quotient gebildet, wenn mindestens einer der beiden Steigungswerte über einem definierten Mindestwert, der deutlich über der Rauschgrenze angesiedelt ist, liegt. Der Quotient wird dann klassifiziert und interpretiert.

Gemäß der Erfindung ist die Auswerteeinheit ausgebildet, mindestens aus der Gewichtungsfaktorensumme und der Steigungsklasse eine Polung zu bestimmen.

Es werden zwei Fälle unterschieden. Gemäß einem ersten Fall wird die Magnetisierung als axial angenommen. Da in mehr als 90% der Zylinder ein axial magnetisierter Magnet verbaut ist, kann für einen vereinfachten Fall die Magnetisierung als axial angenommen werden. In diesem Fall kann die Polung des Magneten auch im statischen Zustand aus der Gewichtssumme in den Bereichen 1, 3, 4, 5 und 7 direkt bestimmt werden. Für die Bestimmung der Polung in den Bereichen 2 und 6 muss zusätzlich noch die Steigungsklassifizierung hinzugezogen werden, der Magnet muss sich also bewegen.

Wird die Magnetisierung nicht als bekannt angenommen, so kann die Magnetkonfiguration in den Bereichen 2, 4 und 6 bestimmt werden, wenn sich der Magnet bewegt.

Gemäß der Erfindung ist die Auswerteeinheit ausgebildet aufgrund der ermittelten Polung, des ARCTAN und des Vorzeichens der radialen Komponente das Positionssignal in mindestens einem Bereich der Messstrecke mit einem konstanten Korrekturwert zu korrigieren, so dass ein monotones Positionssignal mit einem monotonen Wertebereich über die gesamte Messstrecke gebildet ist. Die Korrekturfaktoren sind beispielsweise - Pi, + Pi und/oder Null.

Gemäß einer bevorzugten Ausführungsform ist die Auswerteeinheit ausgebildet ist, das korrigierte Positionssignal mit einem Polynom 3. Grades zu approximieren.

Für einen diametral magnetisierten Magneten müssen vor jeglicher Auswertung die axiale Komponente und die radiale Komponente vertauscht werden. Das sich ergebende Ausgangssignal kann jedoch noch besser linearisiert werden. Die Ausgangskurve kann durch einen Polynomfit mit einem Polynom 3. Grades gut approximiert werden. Die Koeffizienten beschreiben die Krümmung der Kurve. Die Koeffizienten werden wie folgt bestimmt. Es werden nun drei signifikante Punkte in Bezug auf das erste Sensorelement 1 definiert.

Ein Normfaktorpunkt ist dann erreicht, wenn beide Sensorelemente das betragsmäßig gleiche Ergebnis mit umgekehrtem Vorzeichen ausgeben. Ein Kontrollpunkt ist im Nulldurchgang eines Sensorelements erreicht.

Für die Optimierung der Linearität werden nun beispielsweise die Koeffizienten a und b des Ausgleichspolynoms 3. Grades gesucht, für die die Kurve bestmöglich approximiert wird.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

| | |
|---|---|
| Figur 1 | einen erfindungsgemäßen Sensor; |
| Figur 2 | ein Diagramm mit den Kennlinien von jeweils zwei Feldkomponenten von jeweils zwei Sensorelementen; |
| Figur 3 | eine Tabelle mit Gewichtungsfaktoren; |
| Figur 4 bis 7 | jeweils eine Tabelle mit Gewichtungsfaktorensummen; |
| Figur 8 | eine Tabelle zur Bewertung eines gebildeten Quotienten; |
| Figur 9 | eine Tabelle zur Ermittlung einer Magnetpolung; |
| Figur 10 | eine Tabelle zur Bestimmung einer Polung; |
| Figur 11 | eine Tabelle zur Korrektur des Positionssignals; |
| Figur 12 | jeweils Einzelpositionssignale der beiden Sensorelemente; |

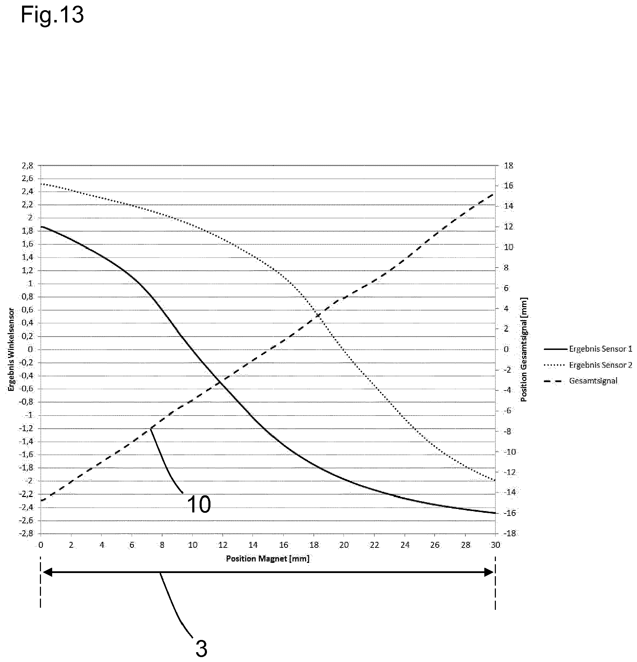

Figur 13          ein gebildetes monotones Positionssignal.

In den nachfolgenden Figuren sind identische Teile mit identischen Bezugszeichen versehen.

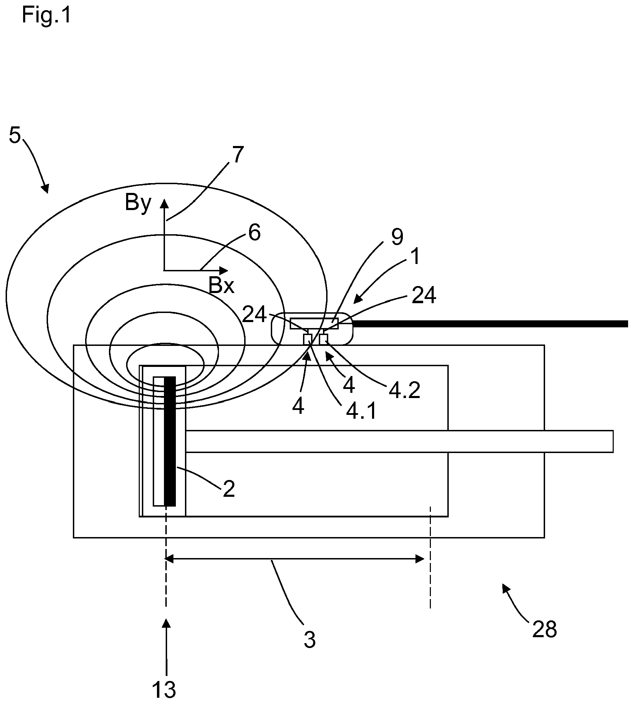

Figur 1 zeigt einen erfindungsgemäßen Sensor 1 zur berührungslosen magnetischen Erfassung linearer Relativbewegung eines Gebermagneten 2 entlang einer Messstrecke 3 mit mindestens zwei Sensorelementen 4.1 und 4.2, wobei die Sensorelemente 4 jeweils zwei senkrecht zueinander stehende Komponenten 6, 7 eines Magnetfeldes 5 des Gebermagneten erfassen, wobei die Sensorelemente 4 und der Sensor 1 kürzer sind als die Messstrecke 3, wobei eine erste Komponente 6 eine axiale Komponente Bx ist, wobei eine zweite Komponente 7 eine radiale Komponente By ist, wobei eine Auswerteeinheit 9 vorgesehen ist, wobei die axiale Komponente Bx jedes Sensorelementes 4.1, 4.2 und die radiale Komponente By jedes Sensorelementes 4.1, 4.2 in der Auswerteeinheit 9 nach einer mathematischen Funktion auswertbar sind, wobei die mathematische Funktion der ARCTAN (radiale Komponente/axiale Komponente) oder ARCTAN (axiale Komponente/radiale Komponente) ist, wodurch jeweils ein abschnittsweise monotones Positionssignal mit jeweils einem Wert eines Wertebereichs für jeweils eine Position 13 entlang der Messstrecke 3 des Gebermagneten 2 gebildet ist, wobei die Auswerteeinheit 9 ausgebildet ist, das jeweilige Positionssignal in mindestens einem Bereich der Messstrecke 3 mit einem konstanten Korrekturwert zu korrigieren, so dass ein jeweils monotones Positionssignal mit einem monotonen Wertebereich über die gesamte Messstrecke 3 gebildet ist.

Die Sensorelemente 4 erfassen jeweils zwei senkrecht zueinander stehende Komponenten eines Magnetfeldes 5 des Gebermagneten 2. Dabei werden die Komponenten über die gesamte Länge des Zylinders 28 bzw. über die gesamte Messstrecke 3 erfasst. Dadurch kann das Sensorelement 4 und der Sensor 1 kürzer sein als die Messstrecke 3. Weiter kann der Sensor 1 an einer beliebigen Stelle entlang der Messstrecke 3 positioniert werden.

Die axiale Komponente Bx und die radiale Komponente By bilden zwei unterschiedliche Signalverläufe entlang der Messstrecke 3, deren Kombination eine eindeutige Information liefern über die genaue Position 13 des Gebermagneten 2.

Gemäß Figur 1 ist das Sensorelement 4 optional ein Winkelsensor auf Basis einer TMR-Technologie.

Gemäß Figur 1 sind die Sensorelemente 4 jeweils ein integrierter Baustein mit mindestens einem Analogausgang 24 und die Auswerteeinheit 9 ist ein Mikrocontroller, der einen integrierten Analog-/Digitalwandler umfasst, wodurch das mindestens eine Analogsignal an dem Analogausgang 24 mit den Werten für die axiale Komponente und die radiale Komponente in der Auswerteeinheit 9 digital verarbeitbar ist.

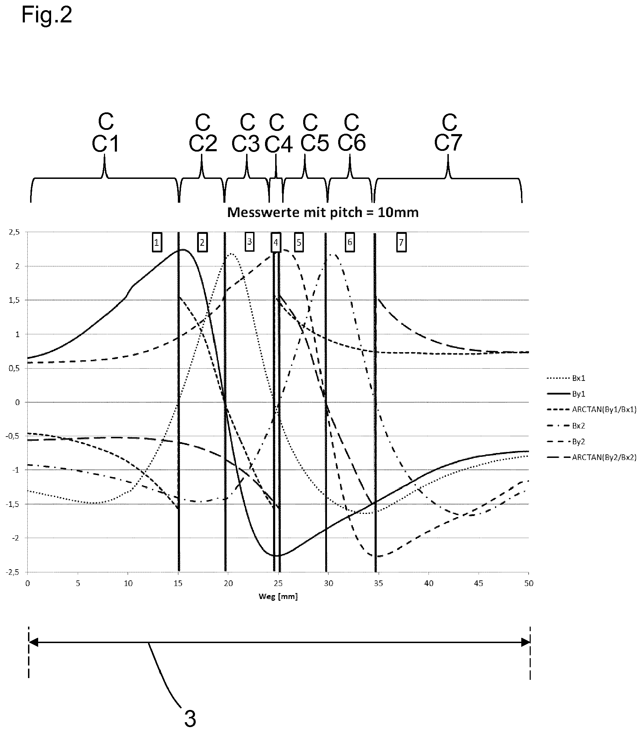

Figur 2 zeigt ein Diagramm mit den Kennlinien von jeweils zwei Feldkomponenten von jeweils zwei Sensorelementen.

Gemäß Figur 2 ist die Auswerteeinheit 9 ausgebildet, die Messstrecke in mindestens vier Bereiche C aufzuteilen, wobei die Grenzen der Bereiche C jeweils an den Sprungstellen des Wertebereichs des ARCTAN liegen und an der Stelle, an der die Arcustangensfunktion die größte Steigung aufweist. Die Bereiche sind mit den Bezugszeichen C bzw. C1 bis C7 bezeichnet, wobei sieben Bereiche C dargestellt sind.

In Figur 2 sind die Kennlinien der zwei Feldkomponenten von jeweils 2 Sensorelementen eines axial magnetisierten Magneten mit positiver Polung dargestellt, wobei die axiale Komponente ein Hauptmaximum hat. Für den Fall, dass der Magnet um 180° rotiert ist, also eine negative Polung aufweist, wird die axiale Komponente Bx an der x-Achse und die radiale Komponente By an der y-Achse gespiegelt. Die Kurven des ARCTAN (By/Bx) sind nicht von der Polung abhängig. Für einen diametral magnetisierten Magneten sind die Feldkomponenten Bx und By vertauscht, ansonsten bleiben die Verläufe gleich.

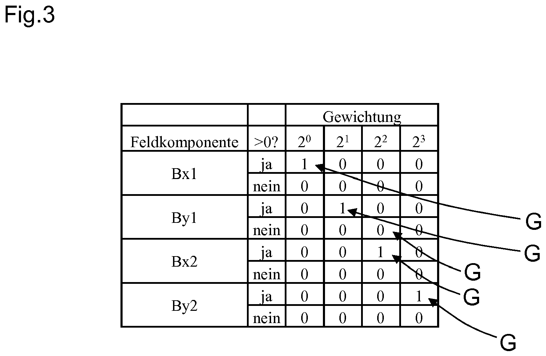

Figur 3 zeigt eine Tabelle mit Gewichtungsfaktoren G. Gemäß Figur 3 werden die Werte X der jeweils axialen Komponente Bx und die Werte Y der jeweils radialen Komponente By jeweils mit einem unterschiedlichen Gewichtungsfaktor G gewichtet, wobei der Gewichtungsfaktor G insbesondere einer Zweierpotenz entspricht.

Für die Erkennung der Magnetfeldparameter Magnetisierungsrichtung und Polung wird in einem ersten Schritt jeweils eine Gewichtungsfaktorsumme mit den dargestellten Gewichtungsfaktoren $2^0$, $2^1$, $2^2$, $2^3$ gebildet.

Figur 4 bis 7 zeigt jeweils eine Tabelle mit Gewichtungsfaktorensummen GS.

Figur 4 zeigt eine Tabelle für einen axial magnetisierten Magneten mit positiver Polung.

Figur 5 zeigt eine Tabelle für einen axial magnetisierten Magneten mit negativer Polung.

Figur 6 zeigt eine Tabelle für einen diametral magnetisierten Magneten mit positiver Polung.

Figur 7 zeigt eine Tabelle für einen diametral magnetisierten Magneten mit negativer Polung.

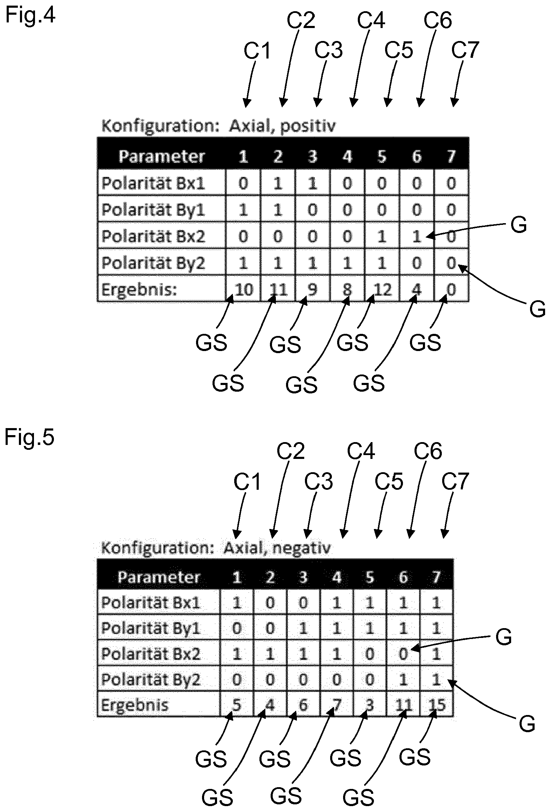

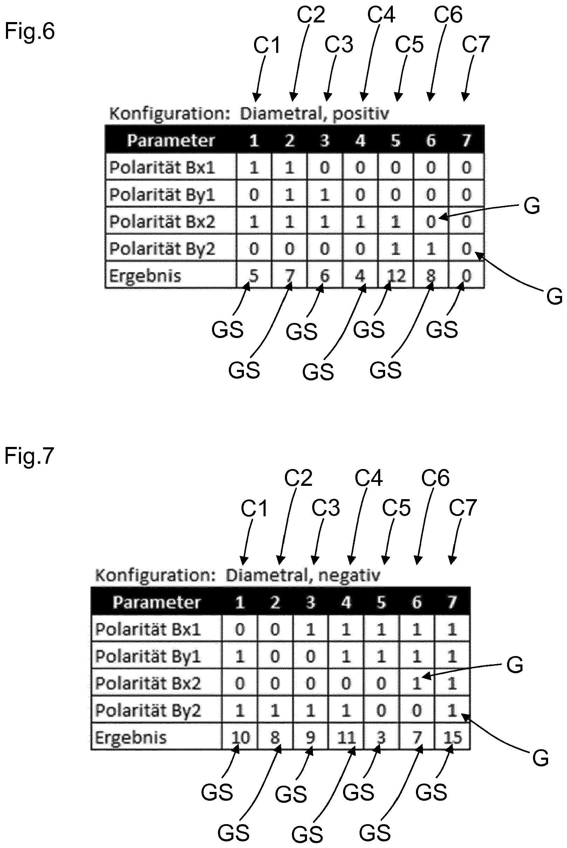

Gemäß den Figuren 4 bis 7 ist die Auswerteeinheit 9 ausgebildet, die Gewichtungsfaktoren G der Werte X der axialen Komponente Bx und die Gewichtungsfaktoren der Werte Y der radialen Komponente By, jeweils eines Bereiches C zu addieren, um jeweils eine Gewichtungsfaktorensumme GS zu bilden.

Es ergeben sich für die vier möglichen Magnetfeldkonfigurationen die dargestellten Gewichtungssummen GS in den sieben Bereichen C1 bis C7.

Um über die Gewichtungsfaktorensumme eine eindeutigere Zuordnung erfolgen kann, wird als weiteres Kriterium die Magnetfeldsteigung der beiden Magnetsensoren ausgewertet.

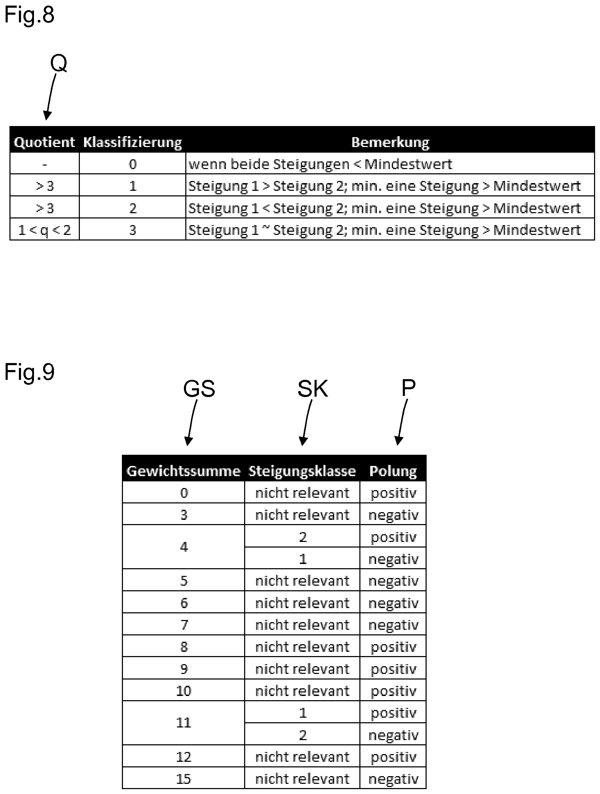

Figur 8 zeigt eine Tabelle zur Bewertung eines gebildeten Quotienten Q.

Die Auswerteeinheit 9 ist ausgebildet, ein Verhältnis der Magnetfeldsteigung nach dem Ausdruck |Bxn- Bxn-1| + |Byn - Byn-1| zu bilden, also der Summe der absoluten Differenzen zweier aufeinanderfolgender Werte jeder Magnetfeldkomponente.

Die Magnetfeldsteigung eines Sensors entspricht dem Ausdruck |Bxn - Bxn-1| + |Byn - Byn-1|, also der Summe der absoluten Differenzen zweier aufeinanderfolgender Messwerte jeder Magnetfeldkomponente. Diese Bestimmung der Magnetfeldsteigung ist wegen der fehlenden räumlichen Zuordnung abhängig von der Verfahrgeschwindigkeit des Magneten sowie der Feldausrichtung. Um diese zwei Einflussfaktoren zu eliminieren, wird das Verhältnis der beiden Steigungswerte von Sensorelement 1 und Sensorelement 2 gebildet. Dabei wird immer der größere Wert als Dividend und der kleinere als Divisor verwendet. Der Quotient Q kann also als kleinsten Wert 1 annehmen. Es wird allerdings nur dann ein Quotient Q gebildet, wenn mindestens einer der beiden Steigungswerte über einem definierten Mindestwert, der deutlich über der Rauschgrenze angesiedelt ist, liegt. Der Quotient Q wird dann wie folgt klassifiziert und interpretiert.

Figur 9 zeigt eine Tabelle zur Ermittlung einer Polung bzw. einer Magnetpolung P.

Die Auswerteeinheit 9 ist ausgebildet, ein Quotient Q von der ersten Magnetfeldsteigung des ersten Sensors und der zweiten Magnetfeldsteigung des zweiten Sensors zu bilden und der Quotient Q ist klassifizierbar, um eine Steigungsklasse zu bilden.

Es werden zwei Fälle unterschieden:

Gemäß einem Fall 1 wird eine Magnetisierung als axial angenommen. Da in mehr als 90% der Zylinder ein axial magnetisierter Magnet verbaut ist, kann für einen vereinfachten Fall die Magnetisierung als axial angenommen werden. In diesem Fall kann die Polung P des Magneten auch im statischen Zustand aus der Gewichtungssumme GS in den Bereichen C1, C3, C4, C5 und C7 gemäß Figur 2 direkt bestimmt werden. Für die Bestimmung der Polung P in den Bereichen C2 und C6 gemäß Figur 2 muss zusätzlich noch die Steigungsklassifizierung SK hinzugezogen werden, der Magnet muss sich also bewegen.

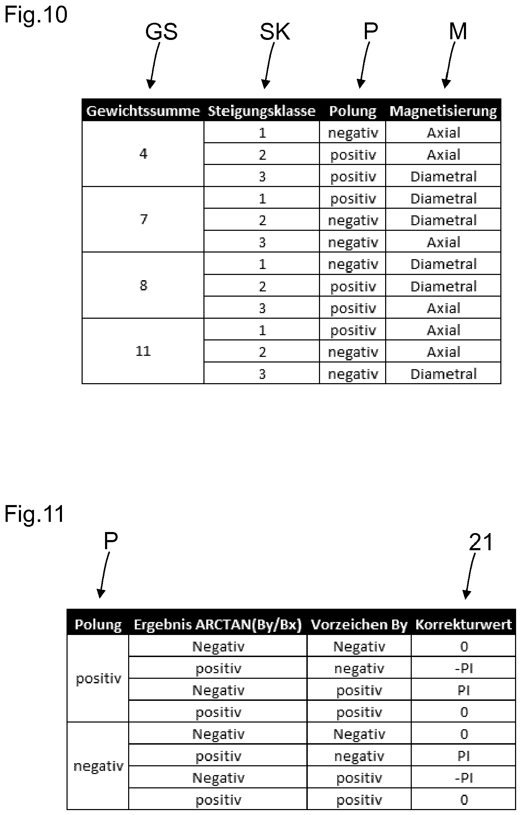

Figur 10 zeigt eine Tabelle zur Bestimmung einer Polung P.

Die Auswerteeinheit 9 ist ausgebildet, wie in Figur 9 und Figur 10 dargestellt mindestens aus der Gewichtungsfaktorensumme GS und der Steigungsklasse SK eine Polung P zu bestimmen.

Wird die Magnetisierung M nicht als bekannt angenommen, so kann die Magnetkonfiguration in den Bereichen C2, C4 und C6 gemäß Figur 2 bestimmt werden, wenn sich der Magnet bewegt.

Figur 11 zeigt eine Tabelle zur Korrektur des Positionssignals. Die Korrekturwerte sind dabei 0, -PI und/oder +PI.

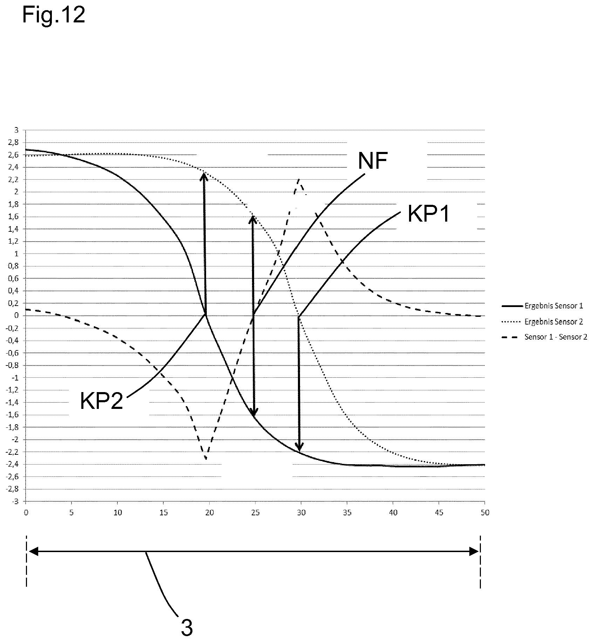

Die Auswerteeinheit 9 ist ausgebildet, aufgrund der ermittelten Polung P, des Ergebnisses des ARCTAN und des Vorzeichens der radialen Komponente BY das Positionssignal gemäß Figur 12 in mindestens einem Bereich C der Messstrecke 3 mit einem konstanten Korrekturwert 21 zu korrigieren, so dass ein monotones Positionssig-nal mit einem monotonen Wertebereich über die gesamte Messstrecke 3 gebildet ist.

Sind Magnetisierungsrichtung und Magnetpolung bekannt, so kann die Korrektur des Ergebnisses der Berechnung ARCTAN (By/Bx) für jedes Sensorelement wie folgt geschehen.

Figur 12 zeigt jeweils Einzelpositionssignale der beiden Sensorelemente.

Die Auswerteeinheit 9 ist ausgebildet, das korrigierte Positionssignal mit einem Polynom 3. Grades zu approximieren.

Für einen diametral magnetisierten Magneten müssen vor jeglicher Auswertung Bx und By vertauscht werden.

Das sich ergebende Ausgangssignal ist allerdings noch nicht besonders gut linearisiert. Die Ausgangskurve kann durch einen Polynomfit mit einem Polynom 3. Grades gut approximiert werden. Die Koeffizienten beschreiben die Krümmung der Kurve. Die Koeffizienten werden wie folgt bestimmt:

Gemäß Figur 12 werden nun drei signifikante Punkte in Bezug auf Sensorelement 1 definiert:

    Kontrollpunkt 1 (KP1): x-Wert = pitch
    Kontrollpunkt 2 (KP2): x-Wert = 0
    Normfaktorpunkt (NF): x-Wert = pitch / 2

Wobei der Wert ,pitch' gleich dem Abstand der Mittelpunkte der Sensorelemente 4.1 und 4.2 zueinander ist.

Der Normfaktorpunkt NF ist dann erreicht, wenn beide Sensorelemente 4.1 und 4.2 das betragsmäßig gleiche Ergebnis mit umgekehrtem Vorzeichen ausgeben. Ein Kontrollpunkt ist im Nulldurchgang eines Sensorelements erreicht.

Für die Optimierung der Linearität werden nun die Koeffizienten a und b des Ausgleichspolynoms 3. Grades gesucht, für die die Kurve bestmöglich approximiert wird. Dafür wird zuerst der Kontrollpunkt KP durch den Wert des Normfaktorpunkts NF geteilt. Dieser normierte Kontrollpunkt nKP wird als x-Wert in die Gleichung $ax^3 + bx$ eingesetzt:

$$nKP = KP / NF$$

Dann wird ein Wertesweep für a und b durchgeführt, wobei die Bedingung a+b = 1 immer erfüllt sein muss.

$$Y = a/64 * nKP^3 + b/64 * nKP; \quad a = 1 \dots 63, \; b = 63 \dots 1$$

Die Ergebnisse dieses Wertesweeps werden mit pitch / 2 multipliziert und anschließend vom pitch subtrahiert.

$$Delta = |pitch - Y * pitch / 2|$$

Das Koeffizientenpaar (a,b), für das sich die kleinste absolute Differenz ergibt, ist das optimale für den Polynomfit.

Der Fit funktioniert durch die Normierung des Kontrollpunkts sowie die Bedingung, dass a + b = 1 ist. So ist sichergestellt, dass sich die Kurve bestmöglich sowohl durch den Kontrollpunkt KP, als auch den Normfaktorpunkt NF legt.

Figur 13 zeigt jeweils Einzelpositionssignale der beiden Sensorelemente und ein korrigiertes Positionssignal 10. Durch die Auswerteeinheit wurde das Positionssignal 10 in mindestens einem Bereich der Messstrecke 3 mit einem konstanten Korrekturwert korrigiert, so dass ein monotones Positionssignal 10 mit einem monotonen Wertebereich über die gesamte Messstrecke 3 gebildet ist.

Bezugszeichen:

1 Sensor
2 Gebermagnet
3 Messstrecke
4, 4.1, 4.2 Sensorelement
5 Magnetfeld
6 erste Komponente
Bx, Bx1, Bx2 axiale Komponente
7 zweite Komponente
By, By1, By2 radiale Komponente
9 Auswerteeinheit
10 Positionssignal
13 Position
C, C1, C2, C3, C4, C5, C6 Bereiche, Bereich
21 konstanter Korrekturwert
24 Analogausgang
26 Wahrheitstabelle
28 Zylinder
29 Sprungstellen
X, X1, X2 Wert der axialen Komponente
Y, Y1, Y2 Wert der radialen Komponente
G Gewichtungsfaktoren
GS Gewichtungsfaktorensumme
MS Magnetfeldsteigung
SK Steigungsklasse
P Polung
K Korrekturwert
Q Quotient
M Magnetisierung
KP Kontrollpunkt
KP1 Kontrollpunkt 1
KP2 Kontrollpunkt 2
NF Normfaktorpunkt

**Patentansprüche**

1. Sensor zur berührungslosen magnetischen Erfassung linearer Relativbewegung eines Gebermagneten (2) entlang einer Messstrecke (3) mit mindestens zwei Sensorelementen (4), wobei die Sensorelemente (4) jeweils zwei senkrecht zueinander stehende Komponenten (6, 7) eines Magnetfeldes (5) des Gebermagneten erfassen,
   wobei die Sensorelemente (4, 4.1, 4.2) und der Sensor (1) kürzer sind als die Messstrecke (3),
   wobei eine erste Komponente (6) eine axiale Komponente (Bx) ist,
   wobei eine zweite Komponente (7) eine radiale Komponente (By) ist,
   wobei eine Auswerteeinheit (9) vorgesehen ist,
   wobei die axiale Komponente (Bx) jedes Sensorelementes (4.1, 4.2) und die radiale Komponente (By) jedes Sensorelementes (4.1, 4.2) in der Auswerteeinheit (9) nach einer mathematischen Funktion auswertbar sind, wobei die mathematische Funktion der ARCTAN (radiale Komponente/axiale Komponente) oder ARCTAN (axiale Komponente/radiale Komponente) ist,
   wodurch jeweils ein abschnittsweise monotones Positionssignal (10) mit jeweils einem Wert (11) eines Wertebereichs (12) für jeweils eine Position (13) entlang der Messstrecke (3) des Gebermagneten (2) gebildet ist,
   **dadurch gekennzeichnet, dass**
   die Auswerteeinheit ausgebildet ist, das jeweilige Positionssignal (10) in mindestens einem Bereich (14) der Messstrecke (3) mit einem konstanten Korrekturwert (21) zu korrigieren, so dass ein jeweils monotones Positionssignal (10) mit einem monotonen Wertebereich (12) über die gesamte Messstrecke (3) gebildet ist,
   wobei die Werte (X) der axialen Komponenten (Bx), die Werte (Y) der radialen Komponenten (By) jeweils mit einem unterschiedlichen Gewichtungsfaktor (G) gewichtet werden, wobei der Gewichtungsfaktor (G) einer Zweierpotenz entspricht, wobei die Auswerteeinheit (9) ausgebildet ist, einen Quotient von der ersten Magnetfeldsteigung des ersten Sensors und der zweiten Magnetfeldsteigung des zweiten Sensors zu bilden und der Quotient klassifizierbar ist, um eine Steigungsklasse zu bilden, wobei die Auswerteeinheit (9) ausgebildet ist, mindestens aus der Gewichtungsfaktorensumme und der Steigungsklasse eine Polung zu bestimmen und die Auswerteeinheit (9) ausgebildet ist, aufgrund der ermittelten Polung, des ARCTAN und des Vorzeichens der radialen Komponente (BY) das Positionssignal (10) in mindestens einem Bereich (14) der Messstrecke (3) mit einem konstanten Korrekturwert (21) zu korrigieren, so dass ein monotones Positionssignal (10) mit einem monotonen Wertebereich (12) über die gesamte Messstrecke (3) gebildet ist.

2. Sensor nach Anspruch 1, **dadurch gekennzeichnet, dass** das Sensorelement (4) ein Winkelsensor auf Basis einer TMR-Technologie ist.

3. Sensor nach mindestens einem der vorhergehenden Ansprüche, **dadurch gekennzeichnet, dass** die Sensorelemente (4) jeweils ein integrierter Baustein mit mindestens einem Analogausgang (24) ist und die Auswerteeinheit (9) ein Mikrocontroller ist, der einen integrierten Analog-/Digitalwandler umfasst, wodurch das mindestens eine Analogsignal an dem Analogausgang (24) mit den Werten für die axiale Komponente und die radiale Komponente in der Auswerteeinheit (9) digital verarbeitbar ist.

4. Sensor nach mindestens einem der vorhergehenden Ansprüche, **dadurch gekennzeichnet, dass** die Auswerteeinheit (9) ausgebildet ist, die Messstrecke in mindestens vier Bereiche (14) aufzuteilen, wobei die Grenzen (25) der Bereiche jeweils an den Sprungstellen des Wertebereichs des ARCTAN liegen und an der Stelle, an der das Positionssignal (10) die größte Steigung aufweist.

5. Sensor nach mindestens einem der vorhergehenden Ansprüche, **dadurch gekennzeichnet, dass** die Auswerteeinheit (9) ausgebildet ist, die Gewichtungsfaktoren (G) der Werte (X) der axialen Komponente (Bx), der Werte (Y) der radialen Komponente (By), jeweils eines Bereiches (14) zu addieren, um jeweils eine Gewichtungsfaktorensumme (GS) zu bilden.

6. Sensor nach mindestens einem der vorhergehenden Ansprüche, **dadurch gekennzeichnet, dass** die Auswerteeinheit (9) ausgebildet ist, ein Verhältnis der Magnetfeldsteigung nach dem Ausdruck $|Bxn- Bxn-1| + |Byn - Byn-1|$ zu bilden, also der Summe der absoluten Differenzen zweier aufeinanderfolgender Werte jeder Magnetfeldkomponente.

7. Sensor nach mindestens einem der vorhergehenden Ansprüche, **dadurch gekennzeichnet, dass** die Auswerteeinheit (9) ausgebildet ist, das korrigierte Positionssignal mit einem Polynom 3. Grades zu approximieren.

**Claims**

1. A sensor for the contactless magnetic detection of a linear relative movement of a transducer magnet (2) along a measurement path (3) comprising at least two sensor elements (4), wherein the sensor elements (4) each detect two components (6, 7) of a magnetic field (5) of the transducer magnet that are perpendicular to one another, wherein the sensor elements (4, 4.1, 4.2) and the sensor (1) are shorter than the measurement path (3);
wherein a first component (6) is an axial component (Bx);
wherein a second component (7) is a radial component (By),
wherein an evaluation unit (9) is provided;
wherein the axial component (Bx) of each sensor element (4.1, 4.2) and the radial component (By) of each sensor element (4.1, 4.2) can be evaluated in accordance with a mathematical function in the evaluation unit (9), with the mathematical function being the ARCTAN (radial component/axial component) or ARCTAN (axial component/radial component),
whereby a respective sectional monotonic position signal (10) is formed using a respective value (11) of a value range (12) for a respective position (13) along the measurement path (3) of the transducer magnet (2), **characterized in that**
the evaluation unit is configured to correct the respective position signal (10) in at least one region (14) of the measurement path (3) by a constant correction value (21) so that a respective monotonic position signal (10) having a monotonic value range (12) is formed over the total measurement path (3);
with the values (X) of the axial components (Bx), the values (Y) of the radial components (By) each being weighted by a different weighting factor (G), with the weighting factor (G) corresponding to a power of two, with the evaluation unit (9) being configured to form a quotient of the first magnetic field gradient of the first sensor and of the second magnetic field gradient of the second sensor and with the quotient being able to be classified to form a gradient class, with the evaluation unit being configured to determine a polarity at least from the weighting factor sum and the gradient class; and with the evaluation unit (9) being configured to correct the position signal (10) in at least one region (14) of the measurement path (3) by a constant correction value (21) on the basis of the determined polarity, of the ARCTAN, and of the sign of the radial component (BY) so that a monotonic position signal (10) is formed with a monotonic value range (12) over the total measurement path (3).

2. A sensor in accordance with claim 1, **characterized in that** the sensor element (4) is an angle sensor on the basis of TMR technology.

3. A sensor in accordance with at least one of the preceding claims, **characterized in that** the sensor elements (4) each comprise an integrated module having at least one analog output (24); and **in that** the evaluation unit (9) is a microcontroller that comprises an analog to digital converter, whereby the at least one analog signal is digitally processable at the analog output (24) in the evaluation unit (19) with the values for the axial component and the radial component.

4. A sensor in accordance with at least one of the preceding claims, **characterized in that** the evaluation unit (9) is configured to divide the measurement path into at least four regions (14), with the boundaries (25) of the regions each being disposed at the jump discontinuities of the value range of the ARCTAN and at the point at which the position signal (10) has the greatest gradient.

5. A sensor in accordance with at least one of the preceding claims, **characterized in that** the evaluation unit (9) is configured to add the weighting factors (G) of the values (X) of the axial component (Bx) of the values (Y) of the radial component (By), in each case of a range (14), to form a respective weighting factor sum (GS).

6. A sensor in accordance with at least one of the preceding claims, **characterized in that** the evaluation unit (9) is configured to form a ratio of the magnetic field gradient in accordance with the expression $|Bx_n - Bx_{n-1}| + |By_n - By_{n-1}|$, that is with the sum of the absolute differences of two consecutive values of every magnetic field component.

7. A sensor in accordance with at least one of the preceding claims, **characterized in that** the evaluation unit (9) is configured to approximate the corrected position signal using a 3rd degree polynomial.

**Revendications**

1. Capteur de détection magnétique sans contact d'un mouvement relatif linéaire d'un aimant émetteur (2) le long d'un trajet de mesure (3), comportant au moins deux éléments capteurs (4), les éléments capteurs (4) détectant chacun deux composantes (6, 7), perpendiculaires l'une à l'autre, d'un champ magnétique (5) de l'aimant émetteur, dans lequel les éléments capteurs (4, 4.1, 4.2) et le capteur (1) sont plus courts que le trajet de mesure (3), une première composante (6) est une composante axiale (Bx), une seconde composante (7) est une composante radiale (By), il est prévu une unité d'évaluation (9), la composante axiale (Bx) de chaque élément capteur (4.1, 4.2) et la composante radiale (By) de chaque élément capteur (4.1, 4.2) peuvent être évaluées dans l'unité d'évaluation (9) selon une fonction mathématique, la fonction mathématique est l'ARCTAN (composante radiale/composante axiale) ou l'ARCTAN (composante axiale/composante radiale), moyennant quoi un signal de position (10) localement monotone est formé avec une valeur respective (11) d'une plage de valeurs (12) pour une position respective (13) le long du trajet de mesure (3) de l'aimant émetteur (2), **caractérisé en ce que** l'unité d'évaluation est réalisée pour corriger le signal de position respectif (10) avec une valeur de correction constante (21), dans au moins une zone (14) du trajet de mesure (3), de manière à former un signal de position monotone respectif (10) avec une plage de valeurs monotone (12) sur la totalité du trajet de mesure (3), les valeurs (X) des composantes axiales (Bx), les valeurs (Y) des composantes radiales (By) sont pondérées chacune avec un facteur de pondération différent (G), le facteur de pondération (G) correspond à une puissance de deux, l'unité d'évaluation (9) est réalisée pour former un quotient du premier gradient de champ magnétique du premier capteur et du deuxième gradient de champ magnétique du second capteur, et le quotient est classifiable pour former une classe de gradient, l'unité d'évaluation (9) est réalisée pour déterminer une polarité au moins à partir de la somme des facteurs de pondération et de la classe de gradient, et l'unité d'évaluation (9) est réalisée pour corriger le signal de position (10) dans au moins une zone (14) du trajet de mesure (3) avec une valeur de correction constante (21) sur la base de la polarité déterminée, de l'ARCTAN et du signe de la composante radiale (By), de sorte à former un signal de position monotone (10) avec une plage de valeurs monotone (12) sur la totalité du trajet de mesure (3).

2. Capteur selon la revendication 1, **caractérisé en ce que** l'élément capteur (4) est un capteur d'angle basé sur une technologie TMR.

3. Capteur selon l'une au moins des revendications précédentes, **caractérisé en ce que** les éléments capteurs (4) sont chacun un composant intégré ayant au moins une sortie analogique (24), et l'unité d'évaluation (9) est un microcontrôleur comprenant un convertisseur analogique/numérique intégré, moyennant quoi ledit au moins un signal analogique à la sortie analogique (24) peut être traité numériquement dans l'unité d'évaluation (9) avec les valeurs pour la composante axiale et pour la composante radiale.

4. Capteur selon l'une au moins des revendications précédentes, **caractérisé en ce que** l'unité d'évaluation (9) est réalisée pour subdiviser le trajet de mesure en au moins quatre zones (14), les limites (25) des zones étant situées aux sauts de la plage de valeurs de l'ARCTAN et à l'emplacement où le signal de position (10) présente le plus grand gradient.

5. Capteur selon l'une au moins des revendications précédentes, **caractérisé en ce que** l'unité d'évaluation (9) est réalisée pour additionner les facteurs de pondération (G) des valeurs (X) de la composante axiale (Bx), des valeurs (Y) de la composante radiale (By) d'une zone respective (14), afin de former une somme de facteurs de pondération (GS) respective.

6. Capteur selon l'une au moins des revendications précédentes, **caractérisé en ce que** l'unité d'évaluation (9) est réalisée pour former un rapport du gradient de champ magnétique selon l'expression $|Bxn - Bxn\text{-}1| + |Byn - Byn\text{-}1|$, donc de la somme des différences absolues de deux valeurs successives de chaque composante du champ magnétique.

7. Capteur selon l'une au moins des revendications précédentes, **caractérisé en ce que** l'unité d'évaluation (9) est réalisée pour approximer le signal de position corrigé avec un polynôme de $3^{\text{ième}}$ degré.

Fig.1

Fig.2

EP 3 428 582 B1

Fig.3

| Feldkomponente | >0? | Gewichtung | | | |
|---|---|---|---|---|---|
| | | $2^0$ | $2^1$ | $2^2$ | $2^3$ |
| Bx1 | ja | 1 | 0 | 0 | 0 |
| | nein | 0 | 0 | 0 | 0 |
| By1 | ja | 0 | 1 | 0 | 0 |
| | nein | 0 | 0 | 0 | 0 |
| Bx2 | ja | 0 | 0 | 1 | 0 |
| | nein | 0 | 0 | 0 | 0 |
| By2 | ja | 0 | 0 | 0 | 1 |
| | nein | 0 | 0 | 0 | 0 |

G
G
G
G
G

Fig.4

Konfiguration: Axial, positiv

| Parameter | 1 | 2 | 3 | 4 | 5 | 6 | 7 |
|---|---|---|---|---|---|---|---|
| Polarität Bx1 | 0 | 1 | 1 | 0 | 0 | 0 | 0 |
| Polarität By1 | 1 | 1 | 0 | 0 | 0 | 0 | 0 |
| Polarität Bx2 | 0 | 0 | 0 | 0 | 1 | 1 | 0 |
| Polarität By2 | 1 | 1 | 1 | 1 | 1 | 0 | 0 |
| Ergebnis: | 10 | 11 | 9 | 8 | 12 | 4 | 0 |

Fig.5

Konfiguration: Axial, negativ

| Parameter | 1 | 2 | 3 | 4 | 5 | 6 | 7 |
|---|---|---|---|---|---|---|---|
| Polarität Bx1 | 1 | 0 | 0 | 1 | 1 | 1 | 1 |
| Polarität By1 | 0 | 0 | 1 | 1 | 1 | 1 | 1 |
| Polarität Bx2 | 1 | 1 | 1 | 1 | 0 | 0 | 1 |
| Polarität By2 | 0 | 0 | 0 | 0 | 0 | 1 | 1 |
| Ergebnis | 5 | 4 | 6 | 7 | 3 | 11 | 15 |

Fig.6

C1 C2 C3 C4 C5 C6 C7

Konfiguration: Diametral, positiv

| Parameter | 1 | 2 | 3 | 4 | 5 | 6 | 7 |
|---|---|---|---|---|---|---|---|
| Polarität Bx1 | 1 | 1 | 0 | 0 | 0 | 0 | 0 |
| Polarität By1 | 0 | 1 | 1 | 0 | 0 | 0 | 0 |
| Polarität Bx2 | 1 | 1 | 1 | 1 | 1 | 0 | 0 |
| Polarität By2 | 0 | 0 | 0 | 0 | 1 | 1 | 0 |
| Ergebnis | 5 | 7 | 6 | 4 | 12 | 8 | 0 |

G

G

GS GS GS GS
GS GS GS

Fig.7

C1 C2 C3 C4 C5 C6 C7

Konfiguration: Diametral, negativ

| Parameter | 1 | 2 | 3 | 4 | 5 | 6 | 7 |
|---|---|---|---|---|---|---|---|
| Polarität Bx1 | 0 | 0 | 1 | 1 | 1 | 1 | 1 |
| Polarität By1 | 1 | 0 | 0 | 1 | 1 | 1 | 1 |
| Polarität Bx2 | 0 | 0 | 0 | 0 | 0 | 1 | 1 |
| Polarität By2 | 1 | 1 | 1 | 1 | 0 | 0 | 1 |
| Ergebnis | 10 | 8 | 9 | 11 | 3 | 7 | 15 |

G

G

GS GS GS GS
GS GS GS

Fig.8

Q

| Quotient | Klassifizierung | Bemerkung |
|----------|-----------------|-----------|
| - | 0 | wenn beide Steigungen < Mindestwert |
| > 3 | 1 | Steigung 1 > Steigung 2; min. eine Steigung > Mindestwert |
| > 3 | 2 | Steigung 1 < Steigung 2; min. eine Steigung > Mindestwert |
| 1 < q < 2 | 3 | Steigung 1 ~ Steigung 2; min. eine Steigung > Mindestwert |

Fig.9

GS          SK          P

| Gewichtssumme | Steigungsklasse | Polung |
|---------------|-----------------|--------|
| 0 | nicht relevant | positiv |
| 3 | nicht relevant | negativ |
| 4 | 2 | positiv |
| | 1 | negativ |
| 5 | nicht relevant | negativ |
| 6 | nicht relevant | negativ |
| 7 | nicht relevant | negativ |
| 8 | nicht relevant | positiv |
| 9 | nicht relevant | positiv |
| 10 | nicht relevant | positiv |
| 11 | 1 | positiv |
| | 2 | negativ |
| 12 | nicht relevant | positiv |
| 15 | nicht relevant | negativ |

EP 3 428 582 B1

Fig.10

GS          SK          P          M

| Gewichtssumme | Steigungsklasse | Polung | Magnetisierung |
|---|---|---|---|
| 4 | 1 | negativ | Axial |
| | 2 | positiv | Axial |
| | 3 | positiv | Diametral |
| 7 | 1 | positiv | Diametral |
| | 2 | negativ | Diametral |
| | 3 | negativ | Axial |
| 8 | 1 | negativ | Diametral |
| | 2 | positiv | Diametral |
| | 3 | positiv | Axial |
| 11 | 1 | positiv | Axial |
| | 2 | negativ | Axial |
| | 3 | negativ | Diametral |

Fig.11

P                                                      21

| Polung | Ergebnis ARCTAN(By/Bx) | Vorzeichen By | Korrekturwert |
|---|---|---|---|
| positiv | Negativ | Negativ | 0 |
| | positiv | negativ | -PI |
| | Negativ | positiv | PI |
| | positiv | positiv | 0 |
| negativ | Negativ | Negativ | 0 |
| | positiv | negativ | PI |
| | Negativ | positiv | -PI |
| | positiv | positiv | 0 |

18

Fig.12

Fig.13

**IN DER BESCHREIBUNG AUFGEFÜHRTE DOKUMENTE**

**In der Beschreibung aufgeführte Patentdokumente**

- US 20140239942 A1
- EP 1679493 A2
- US 20130027028 A1
- DE 102007002221 A1
- EP 1826533 A1